# EUROPÄISCHE PATENTSCHRIFT

(11) **EP 1 919 989 B1**
(45) Veröffentlichungstag und Bekanntmachung des Hinweises auf die Patenterteilung: **04.05.2011**
(21) Anmeldenummer: 06792752.5
(22) Anmeldetag: 09.08.2006
(51) Int. Cl.: C08J 9/00

(54) **VERFAHREN ZUR HERSTELLUNG VON SCHAUMSTOFFPLATTEN**
METHOD FOR PRODUCING CELLULAR MATERIAL SLABS
PROCEDE POUR PRODUIRE DES PLAQUES EN MATERIAU ALVEOLAIRE

(30) Priorität: 23.08.2005 DE 102005039976; 05.04.2006 EP 06112263
(43) Veröffentlichungstag der Anmeldung: 14.05.2008
(73) Patentinhaber: BASF SE, 67056 Ludwigshafen (DE)
(72) Erfinder: ALLMENDINGER, Markus, 67480 Edenkoben (DE); HAHN, Klaus, 67281 Kirchheim (DE); SCHMIED, Bernhard, 67227 Frankenthal (DE); RIETHUES, Michael, 67071 Ludwigshafen (DE)
(86) Internationale Anmeldenummer: PCT/EP2006/065176
(87) Internationale Veröffentlichungsnummer: WO 2007/023090

(56) Entgegenhaltungen:
- EP-A- 1 074 676
- WO-A-2005/056268
- WO-A-2005/056653
- WO-A-2005/116133

## Beschreibung

Die Erfindung betrifft ein Verfahren zur Herstellung von Schaumstoffformkörpern aus vorgeschäumten Schaumstoffpartikeln, welche eine Polymerbeschichtung aufweisen, sowie daraus hergestellte Schaumstoffformköper und deren Verwendung.

Partikelschaumstoffe werden üblicherweise durch Versintern von Schaumstoffpartikeln, beispielsweise aus vorgeschäumten expandierbaren Polystyrolpartikeln (EPS) oder expandierten Polypropylenpartikeln (EPP), in geschlossenen Formen mittels Wasserdampf erhalten. Damit die Schaumpartikel nachexpandieren und miteinander zu dem Schaumstoffformkörper gut verschweißen können, müssen sie in der Regel noch geringe Restmengen an Treibmittel enthalten. Die Schaumstoffpartikel dürfen daher nach dem Vorschäumen nicht zu lange gelagert werden. Auch können aufgrund der fehlenden Nachexpandierbarkeit von zerkleinerten Schaumstoffrecyclaten aus nicht mehr verwendungsfähigen Partikelschaumstoffen nur geringe Mengen zur Herstellung neuer Schaumstoffformkörper zugemischt werden.

Füllstoffhaltige, expandierbare Thermoplastgranulate und daraus erhältliche Schaumstoffpartikel bzw. -Formkörper sind in WO 2005/056653 beschrieben. Bei hohen Füllstoffgehalten ist die Verarbeitung aufgrund der geringeren Verschäumbarkeit schwieriger. Die Verschweißbarkeit ist häufig nicht ausreichend, um Schaumstoffformkörper mit sehr guten mechanischen Eigenschaften zu erhalten.

Die WO 00/050500 beschreibt flammgeschützte Schaumstoffe aus vorgeschäumten Polystyrolpartikeln, welche zusammen mit einer wässrigen Natriumsilikatlösung und einem Latex eines hochmolekularen Vinylacetatcopolymer gemischt, in eine Form gegossen und unter Schütteln an Luft getrocknet werden. Hierbei entsteht nur eine lose Schüttung aus Polystyrolpartikeln, die an wenigen Punkten miteinander verklebt sind und daher nur ungenügende mechanische Festigkeiten aufweisen.

Die. WO 2005/105404 beschreibt ein energiesparendes Verfahren zur Herstellung von Schaumstoffformkörpern, bei der die vorgeschäumten Schaumstoffpartikel mit einer Harzlösung beschichtet werden, welche eine gegenüber dem expandierbaren Polymer niedrigere Erweichungstemperatur aufweist. Die beschichteten Schaumpartikel werden anschließend in einer Form unter Anwendung äußeren Drucks oder durch Nachexpansion der Schaumpartikel wie üblich mit heißem Wasserdampf verschweißt. Hierbei können wasserlösliche Bestandteile der Beschichtung ausgewaschen werden. Aufgrund der höheren Temperaturen an den Eintrittstellen und dem Abkühlen des Wasserdampfes beim Kondensieren, kann die Verschweißung der Schaumpartikel und die Dichte kann über den gesamten Schaumstoffkörper erheblich schwanken. Außerdem kann kondensierender Wasserdampf in den Zwickeln zwischen den Schaumpartikeln eingeschlossen werden.

Die WO 2005/116133 beschreibt ein schallisolierendes Bauteil für Kraftfahrzeuge, welches aus mindestens einem Kunststoffformteil aus thermoplastischem Elastomer auf Basis von Styrol und Füllstoff gebildet wird. Das Kunststoffformteil kann ganzflächig oder partiell mit Vließstoff oder Schaumstoff bedeckt sein.

Die WO 2005/056268 beschreibt expandierbare Styrolpolymergranulate, welche durch Schmelzeextrusion erhältlich sind und eine nahezu kugelförmige Geometrie aufweisen. Die expandierbaren Styrolpolymergranulate können 5 bis 50 Gew.-% eines Füllstoffes enthalten und zur besseren Verarbeitbarkeit mit Glycerinester, Antistatika oder Antiverklebungsmittel beschichtet werden.

Die EP-A 1 074 676 beschreibt einen Fußbodenbelag, weicher als Basisschicht einen mikrozellulären Schaumstoff auf Basis von Ethylvinylacetat-Copolymeren umfasst.

Aufgabe der Erfindung war es daher, den genannten Nachteilen abzuhelfen und ein einfaches und energiesparendes Verfahren zur Herstellung von Schaumstoffformkörpern mit hohen Füllstoffanteilen und guten mechanischen Eigenschaften, insbesondere einer hohen Biegefestigkeit zu finden.

Demgemäss wurde ein Verfahren zur Herstellung von Schaumstoffformkörpern durch Versintern von vorgeschäumten Schaumstoffpartikeln, welche eine Polymerbeschichtung mit einer Glasübergangstemperatur im Bereich von -60 bis +60°C aufweisen, in einer Form unter Druck, wobei die vorgeschäumten Schaumstoffpartikel 10 bis 70 Gew.%, bezogen auf die Schaumstoffpartikel, eines Füllstoffes enthalten, und wobei die Polymerbeschichtung Alkalimetallsilikate, Metallhydroxide, Metallsalz-Hydrate oder Metalloxid-Hydrate enthält.

Als Schaumstoffpartikel können expandierte Polyolefine, wie expandiertes Polyethylen (EPE) oder expandierteres Polypropylen (EPP) oder vorgeschäumte Partikel aus expandierbaren Styrolpolymeren, insbesondere expandierbarem Polystyrol (EPS) eingesetzt werden. Die Schaumstoffpartikel weisen in der Regel einen mittleren Partikeldurchmesser im Bereich von 2 bis 10 mm auf. Die Schüttdichte der Schaumstoffpartikel beträgt in der Regel 5 bis 50 kg/m³, bevorzugt 5 bis 40 kg/m³ und insbesondere 8 bis 16 kg/m³, bestimmt nach DIN EN ISO 60).

Sie enthalten erfindungsgemäß 10 bis 70 Gew.-%, bevorzugt 25 bis 50 Gew.-%, bezogen auf die vorgeschäumten Schaumstoffpartikel, eines Füllstoffes. Als Füllstoffe kommen organische und anorganische Pulver oder Faserstoffe, sowie Mischungen davon in Betracht. Als organische Füllstoffe können z. B. Holzmehl, Stärke, Flachs-, Hanf-, Ramie-, Jute-, Sisal- Baumwoll- Cellulose oder Aramidfasern eingesetzt werden. Als anorganische Füllstoffe können z. B. Carbonate, Silikate, Schwerspat, Glaskugeln, Zeolithe oder Metalloxide eingesetzt werden. Bevorzugt werden pulverförmige anorganische Stoffe, wie Talk, Kreide, Kaolin (Al₂(Si₂O₅)(OH)₄), Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde oder Wollastonit oder Kugel- oder faserförmige, anorganische Stoffe, wie Glaskugeln, Glasfasern oder Kohlefasern.

Die mittleren Teilchendurchmesser bzw. bei faserförmigen Füllstoffen die Länge sollte im Bereich der Zellgröße oder kleiner liegen. Bevorzugt wird ein mittlerer Teilchendurchmesser im Bereich von 1 bis 100 µm, bevorzugt im Bereich von 2 bis 50 µm.

Besonders bevorzugt werden anorganische Füllstoffe mit einer Dichte im Bereich von 1,0 -4,0 g/cm³ insbesondere im Bereich von 1,5 - 3,5 g/cm³. Der Weißgrad/Helligkeit (DIN/ISO) beträgt bevorzugt 50 - 100%, insbesondere 60 - 98%.

Durch die Art und Menge der Füllstoffe können die Eigenschaften der expandierbaren thermoplastischen Polymeren und der daraus erhältlichen Partikelschaumformteile beeinflussen. Durch die Verwendung von Haftvermittlern, wie Maleinsäureanhydridmodifizierte Styrolcopolymere, epoxidgruppenhaltige Polymere, Organosilane oder Styrolcopolymere mit Isocyanat- oder Säuregruppen kann die Anbindung des Füllstoffes an die Polymermatrix und damit die mechanischen Eigenschaften der Partikelschaumformteile deutlich verbessert werden.

In der Regel verringern anorganische Füllstoffe die Brennbarkeit. Insbesondere durch Zusatz von anorganischen Pulvern, wie Aluminiumhydroxid kann das Brandverhalten deutlich verbessert werden.

Derartige füllstoffhaltige Schaumstoffpartikel können beispielsweise durch Verschäumen von füllstoffhaltigen, expandierbaren thermoplastischen Granulaten erhalten werden. Bei hohen Füllstoffgehalten können die hierfür benötigten expandierbaren Granulate durch Extrusion treibmittelhaltiger Thermoplastschmelzen und anschließende Druckunterwassergranulierung, wie z. B. in WO 2005/056653 beschrieben, erhalten werden.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck- oder kontinuierlichen Vorschäumer können hierbei Endschüttdichten unter 10 g/l erhalten werden.

Ein bevorzugtes Verfahren umfasst die Stufen
a) Vorschäumen von expandierbaren Styrolpolymeren zu Schaumstoffpartikeln,
b) Beschichten der Schaumstoffpartikel mit einer Polymerlösung oder wässrigen Polymerdispersion,
c) Einfüllen der beschichteten Schaumstoffpartikel in eine Form und Versintern unter Druck in Abwesenheit von Wasserdampf.

Aufgrund ihrer hohen Wärmedämmfähigkeit verwendet man besonders bevorzugt vorgeschäumte, expandierbare Styrolpolymerisate, die athermane Festkörper, wie Ruß, Aluminium oder Graphit, insbesondere Graphit einer mittleren Partikelgröße im Bereich von 1 bis 50 µm Partikeldurchmesser in Mengen von 0,1 bis 10 Gew:-%, insbesondere 2 bis 8 Gew.-%, bezogen auf EPS, enthalten und beispielsweise aus EP-B 981 574 und EP-B 981 575 bekannt sind.

Die Polymerschaumpartikel sind insbesondere mit Flammschutzmitteln ausgerüstet. Sie können hierzu beispielsweise 1 bis 6 Gew.-% einer organischen Bromverbindung, wie Hexabromcylcodecan (HBCD) und gegebenenfalls zusätzlich 0,1 bis 0,5 Gew.-% Dicumyl oder eines Peroxides enthalten.

Bei dem erfindungsgemäßen Verfahren können auch zerkleinerte Schaumstoffpartikel aus recyclierten Schaumstoffformkörpern eingesetzt werden. Zur Herstellung der erfindungsgemäßen Schaumstoffformkörper können die zerkleinerten Schaumstoffrecyclate alleine oder mit Neuware gemischt z. B in Anteilen von 2 bis 90 Gew.%, insbesondere 5 bis 25 Gew.% eingesetzt werden, ohne wesentliche Beeinträchtigung des Festigkeit und der mechanischen Eigenschaften.

Die Beschichtung besteht aus einem Polymerfilm, der eine oder mehrere Glasübergangstemperaturen im Bereich von -60° bis +60°C aufweist und in dem gegebenenfalls Füllstoffe eingebettet sein können. Bevorzugt liegen die Glasübergangstemperaturen des Polymerfilmes im Bereich von -30° bis +60°C, besonders bevorzugt im Bereich von -10° bis +60°C. Die Glasübergangstemperatur kann mittels Differential Scanning Calorimetrie (DSC) bestimmt werden. Das Molekulargewicht des Polymerfilms, bestimmt nach Gelpermeationschromatographie (GPC), liegt bevorzugt unter 400.000g/mol.

Zur Beschichtung der Schaumstoffpartikel können übliche Verfahren, wie Besprühen, Tauchen oder Benetzen der Schaumpartikel mit einer Polymerlösung oder Polymerdispersion oder Auftrommeln von festen oder auf Feststoffen absorbierten Polymeren in üblichen Mischern, Sprühvorrichtungen, Tauchvorrichtungen bzw. Trommelapparaturen eingesetzt werden.

Für die Beschichtung eigenen sich beispielsweise Polymere auf Basis von Monomeren wie vinylaromatischen Monomeren, wie α-Methylstyrol, p-Methylstyrol, Ethylstyrol, tert.-Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, α,β-ungesättigten Carbonsäuren, wie Acrylsäure und Methacrylsäure, deren Estern, insbesondere Alkylester, wie C₁₋₁₀-Alkylester der Acrylsäure, insbesondere die Butylester, vorzugsweise n-Butylacrylat, und die C₁₋₁₀-Alkylester der Methacrylsäure, insbesondere Methylmethacrylat (MMA), oder Carbonsäureamide, beispielsweise Acrylsäureamid und Methacrylsäureamid.

Die Polymeren können gegebenenfalls 1 bis 5 Gew.-% Comonomere, wie (Meth)acrylnitril, (Meth)acryl-amid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten.

Bevorzugt sind die Polymeren der Beschichtung aus ein oder mehreren der Monomeren Styrol, Butadien, Acrylsäure, Methacrylsäure, C₁₋₄-Alkylacrylaten, C₁₋₄-Alkylmethacrylaten, Acrylsäureamid, Methacrylsäureamid oder Methylolacrylsäureamid aufgebaut.

Als Bindemittel für die Polymerbeschichtung eignen sich insbesondere Acrylatharze, die bevorzugt als wässrige Polymerdispersionen auf die Schaumstoffpartikel, gegebenenfalls zusätzlich mit hydraulischen Bindemittel auf Basis von Zement, Kalkzement oder Gips aufgetragen werden. Geeignete Polymerdispersionen sind beispielsweise durch radikalische Emulsionspolymerisation von ethylenisch ungesättigten Monomeren, wie Styrol, Acylate oder Methacrylate, wie in WO 00/50480 beschrieben, erhältlich.

Besonders bevorzugt sind reine Acrylate oder Styrol-Acrylate, welche aus den Monomeren Styrol, n-Butylacrylat, Methylmetharcylat (MMA), Methacrylsäure, Acrylamid oder Methylolacrylamid, aufgebaut sind.

Die Herstellung der Polymerdispersion erfolgt in an sich bekannter Weise, etwa durch Emulsions-, Suspensions-, oder Dispersionspolymerisation, bevorzugt in wässriger Phase. Man kann das Polymer auch durch Lösungs- oder Massepolymerisation herstellen, ggf. zerteilen und die Polymerpartikel anschließend in Wasser in üblicher Weise dispergieren. Bei der Polymerisation werden die für das jeweilige Polymerisationsverfahren üblichen Initiatoren, Emulgatoren bzw. Suspensionshilfsmittel, Regler bzw. sonstigen Hilfsstoffe mitverwendet; und man polymerisiert kontinuierlich oder diskontinuierlich bei den für das jeweilige Verfahren üblichen Temperaturen und Drucken in gebräuchlichen Reaktoren.

Die Polymerbeschichtung kann auch Additive, wie anorganische Füllstoffe, wie Pigmente oder Flammschutzmittel enthalten Der Anteil an Additiven hängt von dessen Art und der gewünschten Wirkung ab und beträgt für anorganische Füllstoffe in der Regel 10 bis 99 Gew.-%, bevorzugt 20 bis 98 Gew.-%, bezogen auf die Additiv-haltige Polymerbeschichtung

Bevorzugt enthält die Beschichtungsmischung wasserbindende Substanzen wie z.B. Wasserglas. Dies führt zu einer besseren bzw. schnelleren Verfilmung der Polymerdispersion und damit einem schnelleren Aushärten des Schaumstoffformteils.

Bevorzugt enthält die Polymerbeschichtung Flammschutzmittel, wie Blähgraphit, Borate, insbesondere Zinkborate, Melaminverbindungen oder Phosphorverbindungen oder intumeszierende Massen, welche sich bei Einwirkung höherer Temperaturen, in der Regel über 80 bis100°C, aufblähen, quellen oder aufschäumen und dabei einen isolierenden und hitzebeständigen Schaum bilden, der die darunter liegenden wärmedämmende Schaumstoffpartikel vor der Feuer- und Hitzewirkung schützt. Die Menge der Flammschutzmittel oder intumeszierenden Massen beträgt in der Regel, 2 bis 99 Gew.-%, bevorzugt 5 bis 98 Gew.-% bezogen auf die Polymerbeschichtung.

Bei Verwendung von Flammschutzmitteln in der Polymerbeschichtung, ist es auch möglich, einen ausreichenden Brandschutz bei Verwendung von Schaumstoffpartikeln, die keine, insbesondere keine halogenierten Flammschutzmittel enthalten, zu erreichen, bzw. mit geringeren Mengen an Flammschutzmittel auszukommen, da sich das Flammschutzmittel in der Polymerbeschichtung konzentriert auf der Oberfläche der Schaumstoffpartikel befindet und bei Hitze- oder Feuereinwirkung ein festes Gerüstnetz bildet.

Die Polymerbeschichtung enthält als Additive intumeszierende Massen, die chemisch gebundenes Wasser enthalten oder bei Temperaturen über 40°C Wasser abspalten, ausgewählt aus Alkalimetallsilikate, Metallhydroxide, Metallsalz-Hydrate und Metalloxid-Hydrate.

Mit dieser Beschichtung versehene Schaumpartikel können zu Schaumstoffformkörpern mit erhöhter Brandbeständigkeit, welche ein Brandverhalten der Klasse B gemäß DIN 4102 aufweisen. verarbeitet werden

Geeignete Metallhydroxide sind insbesondere solche der Gruppen 2 (Erdalkalimetalle) und 13 (Bor-Gruppe) des Periodensystems. Bevorzugt sind Magnesiumhydroxid und Aluminiumhydroxid. Letzteres ist besonders bevorzugt.

Als Metallsalz-Hydrate eignen sich alle Metallsalze, in deren Kristallstruktur Kristallwasser eingebaut ist. Analog eignen sich als Metalloxid-Hydrate alle Metalloxide, die in die Kristallstruktur eingebautes Kristallwasser enthalten. Dabei kann die Anzahl der Kristallwassermoleküle pro Formeleinheit die maximal mögliche sein oder darunter liegen, z.B. Kupfersulfat-Pentahydat, -Trihydrat oder -Monohydrat. Zusätzlich zum Kristallwasser können die Metallsalz-Hydrate bzw. Metalloxid-Hydrate auch Konstitutionswasser enthalten.

Bevorzugte Metallsalz-Hydrate sind die Hydrate von Metallhalogeniden (insbesondere -chloriden), -sulfaten, -carbonaten, -phosphaten, -nitraten oder -boraten. Geeignet sind beispielsweise Magnesiumsulfat-Decahydrat, Natriumsulfat-Decahydrat, Kupfersulfat-Pentahydrat, Nickelsulfat-Heptahydrat, Cobalt(II)chlorid-Hexahydrat, Chrom(III)-chlorid-Hexahydrat, Natriumcarbonat-Decahydrat, Magnesiumchlorid-Hexahydrat, und die Zinnborat-Hydrate. Magnesiumsulfat-Decahydrat und Zinnborat-Hydrate sind besonders bevorzugt.

Ebenfalls als Metallsalz-Hydrate in Betracht kommen Doppelsalze bzw. Alaune, beispielsweise solche der allgemeinen Formel: M^{I}M^{II}(SO₄)₂ . 12 H₂O. Als M^{I} können z.B. Kalium, Natrium, Rubidium, Cäsium, Ammonium, Thallium oder Aluminium-lonen auftreten. Als M^{III} fungieren z.B. Aluminium, Gallium, Indium, Scandium, Titan, Vanadium, Chrom, Mangan, Eisen, Cobalt, Rhodium oder Iridium.

Als Metalloxid-Hydrate eignen sich z.B. Aluminiumoxid-Hydrat und bevorzugt Zinkoxid-Hydrat oder Bortrioxid-Hydrat.

Eine bevorzugte Polymerbeschichtung kann durch Mischen von 40 bis 80, bevorzugt 50 bis 70 Gew.-Teilen einer Wasserglaslösung mit einem Wassergehalt von 40 bis 90, bevorzugt 50 bis 70 Gew.-%,
20 bis 60, bevorzugt 30 bis 50 Gew.-Teilen eines Wasserglaspulvers mit einem Wassergehalt von 0 bis 30, bevorzugt 1 bis 25 Gew.-%, und
5 bis 40, bevorzugt 10 bis 30 Gew.-Teile einer Polymerdispersion mit einem Feststoffgehalt von 10 bis 60, bevorzugt 20 bis 50 Gew.-%,
   oder durch Mischen von
20 bis 95, bevorzugt 40 bis 90 Gew.-Teilen einer Aluminiumhydroxidsuspension mit einem Aluminiumhydroxidgehalt von 10 bis 90, bevorzugt 20 bis 70 Gew.-%,
5 bis 40, bevorzugt 10 bis 30 Gew.-Teile einer Polymerdispersion mit einem Feststoffgehalt von 10 bis 60, bevorzugt 20 bis 50 Gew.-%,
erhalten werden.

Bei dem erfindungsgemäßen Verfahren kann der Druck beispielsweise durch Verkleinerung des Volumens der Form mittels eines beweglichen Stempels erzeugt werden. In der Regel wird hierbei ein Druck im Bereich von 0,5 bis 30 kg/cm²eingestellt. Die Mischung aus beschichteten Schaumstoffpartikel wird hierzu in die geöffnete Form gefüllt. Nach dem Verschließen der Form werden die Schaumpartikel mit dem Stempel verpresst, wobei die Luft zwischen den Schaumstoffpartikeln entweicht und das Zwickelvolumen verringert wird. Die Schaumstoffpartikel werden durch die Polymerbeschichtung zum Schaumstoffformkörper verbunden.

Das Formwerkzeug wir entsprechend der gewünschten Geometrie des Schaumstoffkörpers ausgestaltet. Der Füllgrad richtet sich u.a. nach der gewünschten Dicke des späteren Formteils. Für Schaumstoffplatten kann eine einfache kastenförmige Form verwendet werden. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Zur Beschleunigung des Abbindens kann Heißluft in die Form eingedrückt oder die Form beheizt werden. Erfindungsgemäß wird kein Wasserdampf in die Form eingebracht, damit keine wasserlöslichen Bestandteile der Polymerbeschichtung der Schaumstoffpartikel ausgewaschen werden und sich kein Kondenswasser in den Zwickeln bilden kann. Zur Temperierung der Form können jedoch beliebige Wärmeträgermedien, wie Öl oder Dampf eingesetzt werden. Die Heißluft bzw. die Form wird hierfür zweckmäßigerweise auf eine Temperatur im Bereich von 20 bis 120°C, bevorzugt 30 bis 90°C temperiert.

Alternativ oder zusätzlich kann das Versintern unter Einstrahlung von Mikrowellenenergie erfolgen. Hierbei werden in der Regel Mikrowellen im Frequenzenbereich zwischen 0,85 und 100 GHz, bevorzugt 0,9 bis 10 GHz und Bestrahlungszeiten zwischen 0,1 bis 15 Minuten verwendet.

Bei Verwendung von Heißluft mit Temperaturen im Bereich von 80 bis 150°C oder durch Einstrahlen von Mikrowellenenergie bildet sich üblicherweise ein Überdruck von 0,1 bis 1,5 bar, so dass das Verfahren auch ohne äußeren Druck und ohne Volumenverringerung der Form durchgeführt werden kann. Der durch die Mikrowellen oder höheren Temperaturen entstehenden Innendruck lässt die Schaumstoffpartikel leicht weiterexpandieren, wobei diese zusätzlich zur Verklebung über die Polymerbeschichtung auch durch Erweichung der Schaumpartikel selbst verschweißen können. Dabei verschwinden die Zwickel zwischen den Schaumstoffpartikeln. Zur Beschleunigung des Abbindens kann auch hier die Form wie oben beschrieben mit einem Wärmeträgermedium zustätzlich beheizt werden.

Zur kontinuierlichen Herstellung der erfindungsgemäßen Schaumstoffformkörper eignen sich auch Doppelbandanlagen wie sie zur Herstellung von Polyurethanschaumstoffen verwendet werden. Beispielsweise können die vorgeschäumten und beschichteten Schaumstoffpartikel kontinuierlich auf das untere von zwei Metallbänder, welche gegebenenfalls eine Perforation aufweisen können, aufgetragen werden und mit oder ohne Kompression durch die zusammenlaufenden Metallbänder zu endlosen Schaumstoffplatten verarbeitet weiden. In einer Verfahrensausführung wird das Volumen zwischen den beiden Bändern zunehmend verringert, wodurch das Produkt zwischen den Bändern komprimiert wird und die Zwickel zwischen den Schaumstoffpartikeln verschwinden. Nach einer Aushärtungszone wird eine Endlos-Platte erhalten. In einer anderen Ausführungsform kann das Volumen zwischen den Bändern konstant gehalten werden und eine Zone mit Heißluft oder Mirkowellenbestrahlung durchlaufen in der die Schaumstoffpartikel nachschäumen. Auch hier verschwinden die Zwickel und eine Endlosplatte wird erhalten. Es ist auch möglich, die beiden kontinuierlichen Verfahrensauführungen zu kombinieren.

Die Dicke, Länge und Breite der Schaumstoffplatten kann in weiten Grenzen variieren und wird durch die Größe und Schließkraft des Werkzeugs begrenzt. Die Dicke der Schaumstoffplatten beträgt üblicherweise 1 bis 500 mm, bevorzugt 10 bis 300 mm. Die Dichte der Schaumstoffformkörper gemäß DIN 53420 beträgt in der Regel 10 bis 120 kg/m³, bevorzugt 20 bis 70 kg/m³. Mit dem erfindungsgemäßen Verfahrne ist es möglich, Schaumstoffformkörper mit gleichmäßigem Dichte über den gesamten Querschnitt zu erhalten. Die Dichte der Randschichten entspricht etwa der Dichte der innerein Bereiche des Schaumstoffformkörpers.

Die nach dem erfindungsgemäßen Verfahren erhältlichen Schaumstoffformkörper zeigen aufgrund des hohen Füllstoffanteils eine sehr niedrige Wärmeleitfähigkeit und eine sehr gute Flammschutzwirkung. Daher wird weniger Flammschutzmittel in der Beschichtung benötigt. Durch die Verklebung der Schaumstoffpartikel über die Polymerbeschichtung, werden hohe Biegefestigkeiten für die Schaumstoffformteile erhalten.

Das erfindungsgemäße Verfahren eignet sich zur Herstellung von einfachen oder komplexen Schaumstoffformteilen, wie Platten, Blöcken, Rohren, Stäben, Profilen; etc. Bevorzugt werden Platten oder Blöcke, welche anschließend zu Platten gesägt oder geschnitten werden können, hergestellt. Sie können beispielsweise im Bauwesen zur Dämmung von Außenwänden verwendet werden. Besonders bevorzugt werden sie als Kernschicht zur Herstellung von Sandwich-Element, beispielsweise sogenannten structural insulation panels (SIP) verwendet, welch für die Errichtung von Kühlhäuser oder Lagerhallen eingesetzt werden.

Weitere Anwendungsmöglichkeiten sind Paletten aus Schaumstoff als Ersatz für Holzpaletten, Deckensichtplatten, Kühlkontainer, Wohnwagen. Mit Flammschutzausrüstung eignen sich diese auch für die Luftfracht.

### Beispiele:

Herstellung der Beschichtungsmischung:
Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teilen einer Acrylatdispersion (Acronal S790, Feststoffgehalt ca. 50%) untergerührt.
Polystyrolschaumstoffpartikel mit 30 Gew.-% Kreide (Dichte 12 g/l)

In eine Polystyrolschmelze aus PS 158K der BASF Aktiengesellschaft mit einer Viskositätszahl VZ von 95 ml/g (MW = 275.000 g/mol, Uneinheitlichkeit Mw/Mn = 2,6) wurden 6 Gew.-% n-Pentan sowie 30 Gew.-% Kreide (Ulmer Weiß XM) eingemischt. Nach Abkühlen der treibmittelhaltigen Schmelze von ursprünglich 260 °C auf 180°C wurde das Gemisch aus Polystyrolschmelze, Treibmittel und Füllstoff mit 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt.

Diese Granulate wurden in strömendem Wasserdampf zu Schaumstoffpartieln mit einer Dichte von 12 g/l vorgeschäumt und vor der Weiterverarbeitung 24 Stunden zwischengelagert.

### Polystyrolschaumstoffpartikel mit 40 Gew% Aluminiumhydroxid (Dichte 20 g/l)

In eine Polystyrolschmelze aus PS 158K der BASF Aktiengesellschaft mit einer Viskositätszahl VZ von 95 ml/g (MW = 275.000 g/mol, Uneinheitlichkeit Mw/Mn = 2,6) wurde 6 Gew.-% n-Pentan eingemischt. Nach Abkühlen der treibmittelhaltigen Schmelze von ursprünglich 260 °C auf eine Temperatur 180°C wurde im Seitenstromextruder ein Gemisch aus Polystyrolschmelze und Aluminiumhydroxid zugegeben und in den Hauptstrom eingemischt, so dass das Endprodukt 40 Gew.-% Aluminiumhydroxid enthielt. Das Gemisch aus Polystyrolschmelze, Treibmittel und Additiven wurde mit 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt.
Diese Granulate wurden in strömendem Wasserdampf zu Schaumstoffperlen mit einer Dichte von 20 g/l vorgeschäumt und 24 Stunden zwischengelagert.

### Polystyrolschaumstoffpartikel mit 30 Gew% Aluminiumhydroxid (Dichte 20 g/l)

In eine Polystyrolschmelze aus PS 158K der BASF Aktiengesellschaft mit einer Viskositätszahl VZ von 95 ml/g (MW = 275.000 g/mol, Uneinheitlichkeit Mw/Mn = 2,6) wurde 6 Gew.-% n-Pentan eingemischt. Nach Abkühlen der treibmittelhaltigen Schmelze von ursprünglich 260°C auf eine Temperatur 180°C wurde im Seitenstromextruder ein Gemisch aus Polystyrolschmelze und Aluminiumhydroxid zugegeben und in den Hauptstrom eingemischt, so dass das Endprodukt 30 Gew.-% Aluminiumhydroxid enthielt. Das Gemisch aus Polystyrolschmelze, Treibmittel und Additiven wurde mit 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt.

Diese Granulate wurden in strömendem Wasserdampf zu Schaumstoffperlen einer Dichte von 15 g/l vorgeschäumt und vor der Weiterverarbeitung 24 Stunden zwischengelagert.

Pressen unter Volumenreduktion:

### Beispiel 1

Polystyrolschaumstoffpartikel mit 30 Gew.-% Kreide (Dichte 12 g/l)wurden in einem Mischer mit der Beschichtungsmischung im Gewichtsverhältnis 1:3 beschichtet. Die beschichteten Polystyrolschaumpartikel wurden in eine auf 70°C temperierte, Teflonbeschichtete Form gefüllt und mit einem Stempel auf 50 % des ursprünglichen Volumens verpresst. Nach der Aushärtung bei 70°C für 30 Minuten wurde das Schaumstoffformteil entformt. Zur weiteren Konditionierung wurde das Formteil mehrere Tage bei Umgebungstemperatur gelagert. Die Dichte des gelagerten Formteils betrug 75 g/l.

### Beispiel 2

Beispiel 1 wurde wiederholt, wobei Polystyrolschaumstoffpartikel mit 40 Gew% Aluminiumhydroxid und einer von Dichte 20 g/l, welche in einem Mischer mit der Beschichtungsmischung im. Gewichtsverhältnis 1 : 2 beschichtet wurde, eingesetzt wurden. Die Dichte des gelagerten Formteils betrug 80 g/l.

### Beispiel 3

Polystyrolschaumstoffpartikel mit 30 Gew% Aluminiumhydroxid und einer Dichte von 20 g/l wurden mit EPS-Recylatpartikeln im Verhältnis 1:2 gemischt und in einem Mischer mit der Beschichtungsmischung im Gewichtsverhältnis 1:2 beschichtet. Die beschichteten Polystyrolschaumpartikel wurden in eine auf 70°C temperierte, Teflonbeschichtete Form gefüllt und mit einem Stempel auf 40 % des ursprünglichen Volumens verpresst. Nach der Aushärtung bei 70°C für 30 Minuten wurde das Schaumstoffformteil entformt. Zur weiteren Konditionierung wurde das Formteil mehrere Tage bei Umgebungstemperatur gelagert. Die Dichte des gelagerten Formteils betrug 70 g/l.

Die Schaumstoffformkörper der Beispiele 1 bis 3 zeichnen sich dadurch aus, dass sie im Brandtest nicht abtropfen und bei Hitzeeinwirkung nicht zurückweichen. Sie selbstverlöschend und erfüllen die Anforderungen der Brandtests B2 bzw. E.

Aus den Schaumstoffplatten der Beispiele 1 bis 3 wurden Sandwich-Elemente mit Metalldeckschichten hergestellt: Platten mit den Abmessungen 600 x 100 x 100 mm und einer Dichte wie in den Beispielen angegeben wurde beidseitig mit einer jeweils 50 µm dicken Schicht eines Polyurethan-Klebstoffs versehen. Auf den Kleber wurden Stahlplatten von jeweils 1 mm Dicke aufgebracht. Man ließ den Kleber 5 Stunden lang bei 25°C aushärten.

Zur Prüfung des Brandverhaltens im Sandwich-Element wurde das Element waagerecht befestigt (Metallflächen oben und unten) und unter der Platte ein Gasbrenner platziert. Dessen Gasflamme war auf die Mitte der Plattenunterseite gerichtet, die Flamme war etwa 5 cm hoch und hatte eine Flammentemperatur von etwa 600°C. Der Abstand der Flammenspitze zur Unterseite der Platte betrug 2 cm.

Die Prüfung des Brandverhaltens ergab, dass nach 30 min Brenndauer der Flamme nur ein geringer Teil des Polystyrolschaums zwischen den Metallplatten geschmolzen war. Die mechanische Stabilität der Platte blieb erhalten. Der Polystyrolschaum tropfte nicht ab und entzündete sich nicht. Die Rauchentwicklung war sehr gering.

## Patentansprüche

1. Verfahren zur Herstellung von Schaumstoffformkörpern durch Versintern von vorgeschäumten Schaumstoffpartikeln, welche eine Polymerbeschichtung mit einer Glasübergangstemperatur im Bereich von -60 bis +60°C aufweisen, in einer Form unter Druck, wobei die vorgeschäumten Schaumstoffpartikel 10 bis 70 Gew.-%, bezogen auf die Schaumstoffpartikel, eines Füllstoffes enthalten, **dadurch gekennzeichnet, dass** die Polymerbeschichtung als Additive intumeszierende Massen, die chemisch gebundenes Wasser enthalten oder bei Temperaturen über 40°C Wasser abspalten, wie Alkalimetallsilikate, Metallhydroxide, Metallsalz-Hydrate oder Metalloxid-Hydrate enthält.

2. Verfahren nach Anspruch 1, **dadurch gekennzeichnet, dass** die vorgeschäumten Schaumstoffpartikel 25 bis 50 Gew.-%, bezogen auf die Schaumstoffpartikel, eines Füllstoffes enthalten.

3. Verfahren nach Anspruch 1 oder 2, **dadurch gekennzeichnet, dass** sie als Füllstoff pulverförmige anorganische Stoffe, wie Talk, Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Tonerde oder Wollastonit enthalten.

4. Verfahren nach Anspruch 1 oder 2, **dadurch gekennzeichnet, dass** sie als Füllstoffe kugel- oder faserförmige, anorganische Stoffe, wie Glaskugeln, Glasfasern oder Kohlefasern enthalten.

5. Verfahren nach einem der Ansprüche 1 bis 4, **dadurch gekennzeichnet, dass** die vorgeschäumten Schaumstoffpartikel in Abwesenheit von Wasserdampf versintert werden.

6. Verfahren nach einem der Ansprüche 1 is 5, **dadurch gekennzeichnet, dass** als Schaumstoffpartikel expandiertes Polyolefin oder vorgeschäumte Partikel aus expandierbaren Styrolpolymeren eingesetzt werden.

7. Verfahren nach einem der Ansprüche 1 bis 6, **dadurch gekennzeichnet, dass** als Schaumstoffpartikel zerkleinerte Partikel aus recyclierten Schaumstoffformkörpern eingesetzt werden.

8. Verfahren nach einem der Ansprüche 1 bis 7, **dadurch gekennzeichnet, dass** die Polymerbeschichtung als Bindemittel ein Acrylatharz enthält.

9. Verfahren nach Anspruch 8, **dadurch gekennzeichnet, dass** die Polymerbeschichtung durch Mischen von
40 bis 80 Gew.-Teilen einer Wasserglaslösung mit einem Wassergehalt von 40 bis 90 Gew.-%,
20 bis 60 Gew.-Teilen eines Wasserglaspulvers mit einem Wassergehalt von 0 bis 30 Gew.-%, und
5 bis 40 Gew.-Teilen einer Polymerdispersion mit einem Feststoffgehalt von 10 bis 60 Gew.-%,
oder durch Mischen von
20 bis 95 Gew.-Teilen einer Aluminiumhydroxidsuspension mit einem Aluminiumhydroxidgehalt von 10 bis 90 Gew.-%,
5 bis 40 Gew.-Teilen einer Polymerdispersion mit einem Feststoffgehalt von 10 bis 60 Gew.-%,
erhalten wird.

10. Verfahren nach einem der Ansprüche 5 bis 9, umfassend die Stufen
a) Vorschäumen von expandierbaren Styrolpolymeren zu Schaumstoffpartikeln
b) Beschichten der Schaumstoffpartikel mit einer Polymerlösung oder wässrigen Polymerdispersion,
c) Einfüllen der beschichteten Schaumstoffpartikel in eine Form und Versintern unter Druck in Abwesenheit von Wasserdampf.

## Claims

1. A process for producing foam moldings by sintering of prefoamed foam particles which have a polymer coating having a glass transition temperature in the range from -60 to +60°C, in a mold under pressure, the prefoamed foam particles comprising from 10 to 70% by weight, based on the foam particles, of a filler, wherein the polymer coating comprises as additives intumescent compositions which comprise chemically bound water or cleave off water at temperatures above 40°C, for example alkali metal silicates, metal hydroxides, metal salt hydrates or metal oxide hydrates.

2. The process according to claim 1, wherein the prefoamed foam particles comprise from 25 to 50% by weight, based on the foam particles, of a filler.

3. The process according to claim 1 or 2, wherein the prefoamed foam particles comprise pulverulent inorganic materials such as talc, chalk, kaolin, aluminum hydroxide, magnesium hydroxide, aluminum nitrite, aluminum silicate, barium sulfate, calcium carbonate, calcium sulfate, silica, quartz flour, alumina or wollastonite as filler.

4. The process according to claim 1 or 2, wherein the prefoamed foam particles comprise spherical or fibrous, inorganic materials such as glass spheres, glass fibers or carbon fibers as fillers.

5. The process according to any of claims 1 to 4, wherein the prefoamed foam particles are sintered in the absence of steam.

6. The process according to any of claims 1 to 5, wherein expanded polyolefin or prefoamed particles of expandable styrene polymers are used as foam particles.

7. The process according to any of claims 1 to 6, wherein comminuted particles from recycled foam moldings are used as foam particles.

8. The process according to any of claims 1 to 7, wherein the polymer coating comprises an acrylate resin as binder.

9. The process according to claim 8, wherein the polymer coating is obtained by mixing
from 40 to 80 parts by weight of a water glass solution having a water content of from 40 to 90% by weight,
from 20 to 60 parts by weight of a water glass powder having a water content of from 0 to 30% by weight and
from 5 to 40 parts by weight of a polymer dispersion having a solids content of from 10 to 60% by weight,
or by mixing
from 20 to 95 parts by weight of an aluminum hydroxide suspension having an aluminum hydroxide content of from 10 to 90% by weight,
from 5 to 40 parts by weight of a polymer dispersion having a solids content of from 10 to 60% by weight.

10. The process according to any of claims 5 to 9, which comprises the steps
a) prefoaming of expandable styrene polymers to form foam particles,
b) coating of the foam particles with a polymer solution or aqueous polymer dispersion,
c) introduction of the coated foam particles into a mold and sintering under pressure in the absence of steam.

## Revendications

1. Procédé pour la production de corps moulés en mousse par frittage de particules de mousse pré-expansées, qui présentent un enrobage en polymère ayant une température de transition vitreuse dans la plage de -60 à +60 °C, dans un moule sous pression, dans lequel les particules de mousse pré-expansées contiennent de 10 à 70 % en poids, par rapport aux particules de mousse, d'une charge, **caractérisé en ce que** l'enrobage en polymère contient comme additifs des matières intumescentes, qui contiennent de l'eau chimiquement liée ou libèrent de l'eau à des températures supérieures à 40 °C, telles que des silicates de métaux alcalins, des hydroxydes de métaux, des hydrates de sels métalliques ou des hydrates d'oxydes métalliques.

2. Procédé selon la revendication 1, **caractérisé en ce que** les particules de mousse pré-expansées contiennent de 25 à 50 % en poids, par rapport aux particules de mousse, d'une charge.

3. Procédé selon la revendication 1 ou 2, **caractérisé en ce qu'**elles contiennent en tant que charge des matières inorganiques pulvérulentes, telles que le talc, la craie, le kaolin, l'hydroxyde d'aluminium, l'hydroxyde de magnésium, le nitrite d'aluminium, le silicate d'aluminium, le sulfate de baryum, le carbonate de calcium, le sulfate de calcium, l'acide silicique, la poudre de quartz, l'alumine ou la wollastonite.

4. Procédé selon la revendication 1 ou 2, **caractérisé en ce qu'**elles contiennent en tant que charge des matières inorganiques sphériques ou fibreuses, telles que des sphères de verre, des fibres de verre ou des fibres de carbone.

5. Procédé selon l'une quelconque des revendications 1 à 4, **caractérisé en ce que** les particules de mousse pré-expansées sont frittées en absence de vapeur d'eau.

6. Procédé selon l'une quelconque des revendications 1 à 5, **caractérisé en ce qu'**on utilise en tant que particules de mousse une polyoléfine expansée ou des particules pré-expansées à base de polymères de styrène expansibles.

7. Procédé selon l'une quelconque des revendications 1 à 6, **caractérisé en ce qu'**on utilise en tant que particules de mousse des particules fragmentées à base de corps moulés en mousse recyclés.

8. Procédé selon l'une quelconque des revendications 1 à 7, **caractérisé en ce que** l'enrobage en polymère contient en tant que liant une résine acrylate.

9. Procédé selon la revendication 8, **caractérisé en ce que** l'enrobage en polymère est obtenu par mélange de
40 à 80 parties en poids d'une solution d'orthosilicate ayant une teneur en eau de 40 à 90 % en poids,
20 à 60 parties en poids d'une poudre d'orthosilicate ayant une teneur en eau de 0 à 30 % en poids, et
5 à 40 parties en poids d'une dispersion de polymère ayant une teneur en matière solide de 10 à 60 % en poids,
ou par mélange de
20 à 95 parties en poids d'une suspension d'hydroxyde d'aluminium ayant une teneur en hydroxyde d'aluminium de 10 à 90 % en poids,
5 à 40 parties en poids d'une dispersion de polymère ayant une teneur en matière solide de 10 à 60 % en poids.

10. Procédé selon l'une quelconque des revendications 5 à 9, comprenant les étapes
a) pré-expansion de polymères de styrène expansibles en particules de mousse,
b) enrobage des particules de mousse avec une solution de polymère ou une dispersion aqueuse de polymère,
c) introduction des particules de mousse enrobées dans un moule et frittage sous pression en absence de vapeur d'eau.
